# FASCICULE DE BREVET EUROPEEN

(11) **EP 1 022 116 B1**
(45) Date de publication et mention de la délivrance du brevet: **25.09.2002**
(21) Numéro de dépôt: 00400160.8
(22) Date de dépôt: 21.01.2000
(51) Int. Cl.: B29C 70/78, B29C 45/14

(54) **Procédé pour fabriquer une pièce moulée en matière plastique partiellement peinte et pièces ainsi obtenues**
Verfahren zur Herstellung eines geformten Teils aus lackiertem Kunststoff und dabei erhaltene Teile
Method for manufacturing a moulded object of partially painted plastic and objects obtained thereby

(30) Priorité: 21.01.1999 FR 9900628
(43) Date de publication de la demande: 26.07.2000
(73) Titulaire: COMPAGNIE PLASTIC OMNIUM, 69007 Lyon (FR)
(72) Inventeur: Gobled, Patrice, 01580 Izernore (FR); Li, Weidong, 01100 Oyonnax (FR); Gille, Denis, 01100 Bellignat (FR)
(74) Mandataire: Leszczynski, André

(56) Documents cités:
- PATENT ABSTRACTS OF JAPAN vol. 008, no. 189 (M-321), 30 août 1984 (1984-08-30) & JP 59 079741 A (TOYODA GOSEI KK), 9 mai 1984 (1984-05-09)
- PATENT ABSTRACTS OF JAPAN vol. 015, no. 336 (M-1151), 26 août 1991 (1991-08-26) & JP 03 130119 A (TOYODA GOSEI CO LTD), 3 juin 1991 (1991-06-03)

## Description

La présente invention concerne un procédé pour fabriquer une pièce moulée en matière plastique peinte et les pièces ainsi obtenues.

Pour peindre partiellement une pièce en matière plastique, on utilise la technique connue sous le nom de marouflage, qui consiste à déposer un cache sur une zone de la pièce, à peindre intégralement la pièce comportant le cache et à retirer le cache après peinture pour découvrir la partie non peinte de la pièce.

Le cache utilisé à cet effet est généralement une bande autocollante que l'on met en place sur la pièce juste avant l'opération de peinture.

Cette mise en place du cache nécessite une main d'oeuvre importante et correspond à une portion non négligeable du temps de réalisation de la pièce.

De plus, la frontière entre la partie peinte et la partie non peinte, qui apparaît après élimination du cache, présente généralement des irrégularités et des surépaisseurs qui, en plus de nuire à l'esthétique de la pièce, fragilisent la peinture en favorisant son décollement.

Par ailleurs, lorsqu'on désire peindre une pièce en plusieurs couleurs, il faut procéder à plusieurs opérations successives de marouflage, peinture et passage au four, ce qui entraîne un surcoût en termes de main d'oeuvre et d'énergie.

On connaît par la demande de brevet japonaise JP 03 130119 un procédé pour réaliser une pièce par moulage au moyen d'un moule comportant un noyau mobile. Après le moulage de la pièce, ce noyau est déplacé de manière à ménager un espace libre sur une portion de surface de la pièce, puis de la résine est injectée ou déposée dans cet espace de manière à créer une partie de masquage. On applique alors un revêtement sur la pièce, y compris sur la partie de masquage. Enfin, la partie de masquage est retirée. Dans ce procédé, le moule présente une structure relativement complexe.

On connaît par la demande de brevet japonais JP 59 079741 une pièce sur laquelle on applique une peinture et présentant une surface décorative définie par un insert surmoulé. Une fois solidifiée, la peinture peut être retirée de la surface décorative, par application d'une bande adhésive sur la peinture.

La présente invention vise à résoudre ces inconvénients.

La présente invention a pour objet un procédé pour réaliser une pièce en matière plastique peinte tel que décrit dans la revendication 1.

Selon l'invention, on entend par partie non peinte de la pièce une partie qui n'a reçu aucune application de peinture par des moyens de peinture traditionnels, ce qui n'empêche pas cette partie non peinte d'être colorée par d'autres moyens.

Le procédé selon l'invention permet de faire l'économie de l'étape consistant à mettre en place un cache sur la pièce avant l'opération de peinture, cette mise en place s'effectuant, selon l'invention, par dépôt dans le moule du film pelable à l'endroit correspondant à la partie non peinte de la pièce.

Dans un premier mode de réalisation de l'invention, le film pelable est temporairement fixé par adhérence sur une feuille se trouvant du côté du film pelable qui est dirigé vers la matière plastique. La feuille est surmoulée lors du moulage de la pièce et demeure liée à cette dernière. En revanche, le film pelable peut être séparé de la feuille après le surmoulage et après que la pièce a été peinte, faisant apparaître la feuille non peinte.

Dans ce mode de réalisation, la feuille est avantageusement constituée par un film coloré, de sorte que le retrait du film pelable a pour résultat de découvrir le film coloré constituant la feuille.

De cette manière, on peut réaliser une pièce à deux teintes : celle de la peinture et celle du film coloré constituant la feuille.

Dans un autre mode de réalisation de l'invention, le film pelable est réalisé en un matériau non compatible avec la matière plastique constituant la pièce, c'est-à-dire qui présente une mauvaise adhérence avec cette matière.

Dans ce cas, le film peut être séparé directement de la pièce moulée après peinture de cette dernière, laissant alors apparaître la matière plastique constituant la pièce.

Pour mettre en oeuvre l'invention, on peut utiliser les matières plastiques suivantes pour le film et la pièce : ABS (terpolymère acrylonitrile/butadiène/styrène), TPO (thermoplastique oléfine), PET (polyéthylènetéréphtalate), PE (polyéthylène), PC (polycarbonate), PMMA (polyméthacrylate de méthyle), ASA (acrylonitrile/styrène/ester acrylique), alliage PBT/PC (polybutylène/polycarbonate), alliage PA/PC (polyamide/polycarbonate), PVC (polychlorure de vinyle), POM (polyoxyméthylène), acrylique, PU (polyuréthanne), PTFE (polytétrafluoroéthylène), PA (polyamide).

Avantageusement, on préforme le film (et la feuille le cas échéant) avant de le mettre en place dans le moule et on le découpe aux dimensions exactes de la partie de la pièce à masquer.

Le procédé selon l'invention est particulièrement intéressant à mettre en oeuvre pour réaliser des pièces à deux teintes, car l'une des teintes peut être celle de la feuille supportant temporairement le film pelable ou encore être mélangée à la matière plastique si le film pelable n'est pas fixé à une feuille, l'autre teinte étant appliquée par peinture.

La présente invention a également pour objet les pièces obtenues par mise en oeuvre du procédé décrit ci-dessus, et notamment les pièces à deux teintes.

Dans le but de mieux faire comprendre l'invention, on va en décrire maintenant des modes de mise en oeuvre donnés à titre d'exemples non limitatifs, en référence au dessin annexé dans lequel :
- La figure 1 est une vue en coupe d'un film utilisable selon un premier mode de mise en oeuvre de l'invention, en cours de préformage,
- la figure 2 est une vue en coupe d'un moule d'injection servant à réaliser une pièce en matière plastique,
- la figure 3 est une vue en coupe de la pièce issue du moulage,
- la figure 4 est une vue analogue à la figure 3 montrant l'enlèvement du film,
- les figures 5a à 5e montrent des exemples de pièces réalisables par mise en oeuvre du procédé selon l'invention,
- la figure 6 est une vue en coupe d'un film utilisable selon un deuxième mode de mise en oeuvre de l'invention, en cours de préformage,
- la figure 7 est une vue en coupe d'un moule d'injection servant à réaliser une pièce en matière plastique,
- la figure 8 est une vue en coupe de la pièce issue du moulage,
- la figure 9 est une vue analogue à la figure 3 montrant l'enlèvement du film.

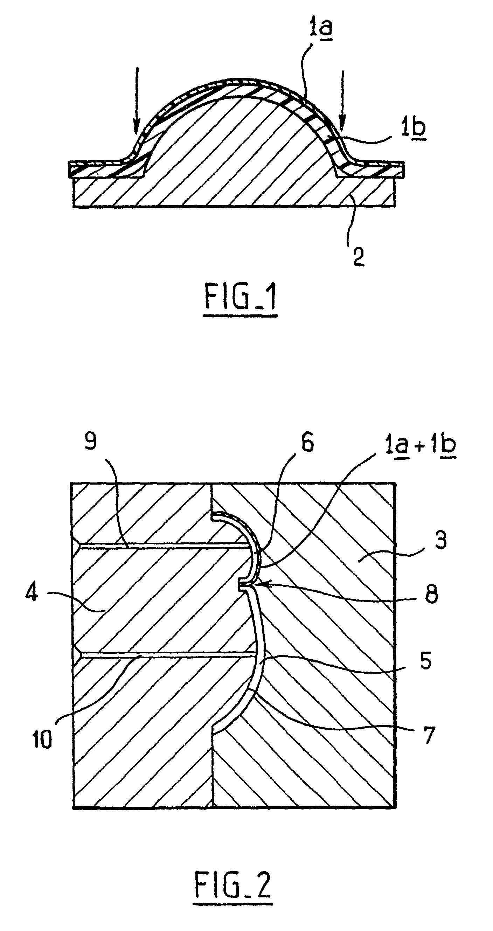

A la figure 1, on a représenté un film 1a en matière thermoplastique, par exemple en ABS. Ce film est temporairement fixé à une feuille 1b en TPO colorée en camaïeu d'une couleur.

Le film et la feuille qui le supporte sont d'abord déposés sur une préforme 2 et soumis à un chauffage pour leur faire épouser cette préforme.

Lorsque l'ensemble constitué par le film 1a et la feuille 1b a atteint la forme souhaitée, ledit ensemble est découpé (selon les flèches) aux dimensions exactes de la partie de la pièce à masquer.

L'ensemble film+feuille peut ainsi être mis en place dans le moule de réalisation de la pièce.

Ce moule, qui est représenté à la figure 2, comporte une matrice 3 et un poinçon 4, lesquels définissent entre eux une empreinte 5 de peau de pare-chocs.

Cette empreinte comprend une partie supérieure 6 et une partie inférieure 7 séparées par une ligne de style 8.

Chaque partie de l'empreinte comporte son propre canal d'alimentation 9, 10.

Dans la partie supérieure 6 de l'empreinte et contre la matrice 3, on positionne le film 1a thermoformé avec la feuille 1b dont les dimensions correspondent exactement à celles de cette partie supérieure.

On injecte ensuite du polypropylène dans le canal d'alimentation supérieur 9, d'où il résulte un surmoulage du film et de la feuille.

Une fois ce surmoulage réalisé, on complète l'injection en envoyant du polypropylène dans le canal d'alimentation inférieur 10 pour remplir la totalité de l'empreinte.

La peau de pare-chocs refroidie 11 est ensuite intégralement peinte, par exemple par projection de peinture.

Après séchage de la peinture, on saisit un coin du film 1a surmoulé et on le tire pour séparer le film de la pièce, ce qui est rendu possible par le fait que le film 1a dit "pelable" adhère mal à la feuille 1b.

La couche de peinture dont le film est recouvert est ainsi retirée de la pièce, ce qui permet de dégager le camaïeu de la feuille à l'endroit correspondant de la pièce. La pièce présente donc deux tons : celui de la peinture et celui de la feuille 1b.

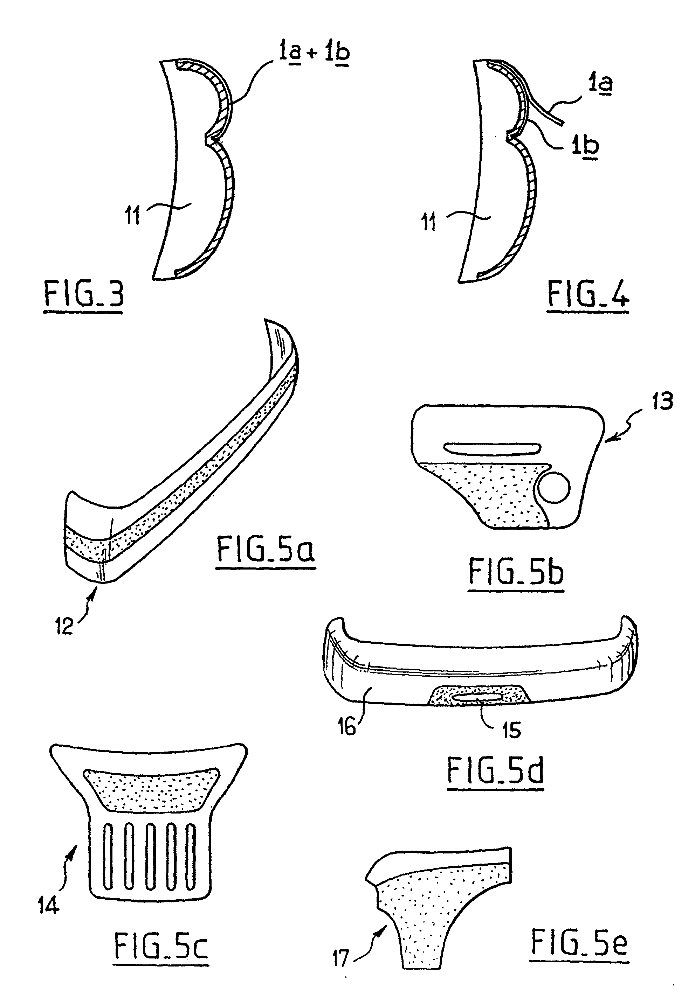

La présente invention est applicable à différentes pièces de carrosserie de véhicules automobiles dont des exemples sont fournis aux figures 5a à 5e, qui représentent respectivement un pare-chocs 12, dont le bourrelet est non peint, un panneau intérieur de portière 13, une grille d'entrée d'air 14 destinée à décorer une calandre, une zone d'admission d'air 15 dans un pare-chocs 16 et une aile de carrosserie 17.

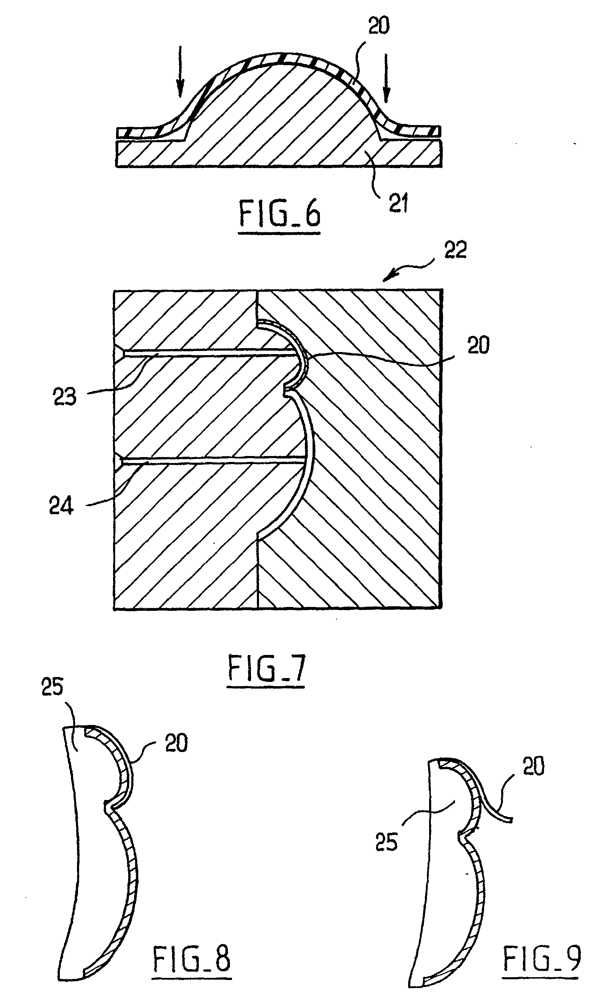

Sur les figures 6 à 9, on a illustré un autre mode de mise en oeuvre de l'invention dans lequel le film 20 n'est pas fixé à une feuille mais constitue à lui seul l'élément à préformer et à mettre en place dans le moule de la pièce avant son moulage par surmoulage du film.

Ledit film est réalisé en un matériau incompatible avec la matière plastique constituant la pièce, afin qu'aucune liaison durable ne se crée entre la matière constituant la pièce et le film.

Comme déjà décrit en référence à la figure 1, le film 20 est tout d'abord préformé puis découpé sur une préforme 21, ainsi que représenté à la figure 6.

Le film préformé et découpé est ensuite mis en place dans un moule ouvert 22, visible à la figure 7, et de la matière plastique est injectée dans le moule par ses canaux d'alimentation 23 et 24, suivant un processus d'injection en deux étapes déjà décrit en référence à la figure 2.

La pièce 25 ainsi obtenue, représentée à la figure 8, est ensuite peinte en totalité.

Une fois la peinture sèche, on retire le film 20 de la pièce et l'on découvre une partie non peinte 26 de la pièce, comme illustré par la figure 9.

Si la matière plastique constituant la pièce a été colorée, par exemple par incorporation de pigments, alors la pièce comporte deux couleurs, celle de la peinture et celle de la matière plastique colorée.

Il est bien entendu que les modes de mise en oeuvre qui viennent d'être décrits ne présentent aucun caractère limitatif et qu'ils pourront recevoir toutes modifications désirables sans sortir pour cela du cadre de l'invention.

## Revendications

1. Procédé pour réaliser une pièce (11; 25) en matière plastique peinte, **caractérisé par le fait qu'**il consiste à déposer, à l'intérieur d'un moule (3, 4 ; 22) définissant la forme de la pièce, un film (1a ; 20) dit "pelable", à réaliser la pièce en surmoulant le film ou une feuille sur laquelle le film est fixé temporairement et se trouvant du côté du film dirigé vers la matière plastique, à peindre la pièce intégralement et à retirer le film pour découvrir la partie non peinte de la pièce, ledit film pelable étant apte à se séparer facilement de ce qui le supporte.

2. Procédé selon la revendication 1, **caractérisé par le fait que** le film pelable (1a) est temporairement fixé par adhérence sur une feuille (1b) se trouvant du côté du film pelable qui est dirigé vers la matière plastique, la feuille étant surmoulée lors du moulage de la pièce et demeurant liée à cette dernière, tandis que le film pelable peut être séparé de la feuille après le surmoulage et après que la pièce a été peinte.

3. Procédé selon la revendication 1, **caractérisé par le fait que** le film pelable (20) est réalisé en un matériau non compatible avec la matière plastique constituant la pièce, c'est-à-dire qui présente une mauvaise adhérence avec cette matière, le film pouvant être séparé directement de la pièce moulée (25) après peinture de cette dernière.

4. Procédé selon l'une quelconque des revendications 1 à 3, **caractérisé par le fait que** pour le film (1a; 20) et la pièce (11 ; 25) on utilise les matières plastiques suivantes : ABS (terpolymère acrylonitrile/butadiène/styrène), TPO (thermoplastique oléfine), PET (polyéthylènetéréphtalate) PE (polyéthylène), PC (polycarbonate), PMMA (polyméthacrylate de méthyle), ASA (acrylonitrile/styrène/ester acrylique), alliage PBT/PC (polybutylène/polycarbonate), alliage PA/PC (polyamide/polycarbonate), PVC (polychlorure de vinyle), POM (polyoxyméthylène), acrylique, PU (polyuréthanne), PTFE (polytétrafluoroéthylène), PA (polyamide).

5. Procédé selon l'une quelconque des revendications 1 à 4, **caractérisé par le fait que** l'on préforme le film (1a) avant de le mettre en place dans le moule et qu'on le découpe aux dimensions exactes de la partie de la pièce à masquer.

6. Procédé selon l'une quelconque des revendications 1 à 5, **caractérisé par le fait que** l'on réalise la pièce avec deux teintes différentes, l'une des teintes étant celle d'une feuille supportant temporairement le film pelable ou encore étant mélangée à la matière plastique constituant la pièce, l'autre teinte étant appliquée par peinture.

## Claims

1. Method for manufacturing a painted plastic object (11; 25), **characterized in that** it consists in depositing, inside a mould (3, 4; 22) defining the shape of the object, a film (1a; 20) called a "peelable film", in manufacturing the object by overmoulding the film or a sheet to which the film is temporarily fastened and which is on the side of the film directed towards the plastic, in completely painting the object and in removing the film in order to uncover the unpainted part of the object, the said peelable film being capable of being easily separated from its support.

2. Method according to Claim 1, **characterized in that** the peelable film (1a) is temporarily fastened by adhesion to a sheet (1b) which is on the side of the peelable film which is directed towards the plastic, the sheet being overmoulded during moulding of the object and remaining bonded thereto, while the peelable film can be separated from the sheet after the overmoulding and after the object has been painted.

3. Method according to Claim 1, **characterized in that** the peelable film (20) is manufactured from a material which is not compatible with the plastic forming the object, that is to say, which has poor adhesion to this plastic, it being possible for the film to be separated directly from the moulded object (25) after painting the latter.

4. Method according to any one of Claims 1 to 3, **characterized in that** the following plastics are used for the film (1a; 20) and the object (11; 25): ABS (acrylonitrile-butadiene-styrene terpolymer), TPO (thermoplastic olefin), PET (polyethylene terephthalate), PE (polyethylene), PC (polycarbonate), PMMA (polymethyl methacrylate), ASA (acrylonitrile-styrene-acrylic ester), PBT/PC (polybutylene terephthalate/polycarbonate) alloy, PA/PC (polyamide/polycarbonate) alloy, PVC (polyvinyl chloride), POM (polyoxymethylene), acrylic, PU (polyurethane), PTFE (polytetrafluoroethylene), PA (polyamide).

5. Method according to any one of Claims 1 to 4, **characterized in that** the film (1a) is preformed before placing it in the mould and **in that** it is cut to the exact dimensions of the part of the object to be masked.

6. Method according to any one of Claims 1 to 5, **characterized in that** the object is manufactured with two different colours, one of the colours being that of a sheet temporarily supporting the peelable film or else being mixed with the plastic constituting the object, the other colour being applied by painting.

## Patentansprüche

1. Verfahren zur Herstellung eines angestrichenen, insbesondere lackierten Kunststoffteils (11; 25), **dadurch gekennzeichnet, dass** es darin besteht, dass in den Innenraum einer Form (3, 4; 22), die die Form des Kunststoffteils definiert, ein Film (1a; 20), der "abziehbar" ist, eingebracht wird, dass das Kunststoffteil hergestellt wird durch Überformen des Films oder eines Blattes, auf dem der Film temporär fixiert ist und das sich auf der Seite des Films befindet, die zum Kunststoffmaterial hin gerichtet ist, dass das Kunststoffteil gänzlich angestrichen wird, und dass der Film abgezogen wird, um einen nicht angestrichenen Teilbereich des Kunststoffteils freizulegen, dabei ist der abziehbare Film so ausgelegt, dass er einfach von einem Teil gelöst werden kann, das ihn trägt.

2. Verfahren nach Anspruch 1, **dadurch gekennzeichnet, dass** der abziehbare Film (1a) temporär durch Haftung fixiert ist an einem Blatt (1b), das sich auf der Seite des abziehbaren Films befindet, die zum Kunststoffmaterial gerichtet ist, dass das Blatt während des Formens des Kunststoffteils überformt wird und mit diesem verbunden bleibt, wohingegen der abziehbare Film vom Blatt nach dem Überformen und nach dem Anstreichen des Kunststoffteils getrennt werden kann.

3. Verfahren nach Anspruch 1, **dadurch gekennzeichnet, dass** der abziehbare Film (20) aus einem Material hergestellt ist, das nicht kompatibel ist mit dem das Kunststoffteil bildenden Kunststoffmaterial, dass der Film also eine schlechte Haftung an diesem Kunststoffmaterial aufweist und der Film direkt vom geformten Kunststoffteil (25) abgelöst werden kann, nachdem dieses angestrichen worden ist.

4. Verfahren nach einem beliebigen der Ansprüche 1 bis 3, **dadurch gekennzeichnet, dass** man für den Film (1a; 20) und das Kunststoffteil (11; 25) folgende Kunststoffmaterialien verwendet:
ABS (Terpolymer Acrylnitril-Butadien-Styrol), TPO (thermoplastisches Olefin), PET (Polyethylenterephtalat) PE (Polyethylen), PC (Polycarbonat), PMMA (Polymethylmetacrylat), ASA (Acrylonitril-Styrol-Acrylester), Verbindungen PBT/PC (Polybutylen-Polycarbonat), Verbindungen PA/PC (Polyamid/Polycarbonat), PVC (Polyvinylchlorid) POM (Polyoxymethylen), Acryl, PU (Polyurethan), PTFE (Polytetrafluorethylen), PA (Polyamid).

5. Verfahren nach einem beliebigen der Ansprüche 1 bis 4, **dadurch gekennzeichnet, dass** man den Film (1a) vorformt, bevor man ihn in die Form einbringt und dass man ihn auf die exakten Dimensionen der zu maskierenden Partie des Kunststoffteils abschneidet.

6. Verfahren nach einem beliebigen der Ansprüche 1 bis 5, **dadurch gekennzeichnet, dass** man ein Kunststoffteil mit zwei unterschiedlichen Anfärbungen herstellt, wobei die eine Anfärbung diejenige des Blattes ist, das temporär den abziehbaren Film trägt oder schon eingemischt ist in das Kunststoffmaterial, das das Kunststoffteil bildet, und dass die andere Färbung wird während des Anstreichens aufgebracht wird.
